# FASCICULE DE BREVET EUROPEEN

(11) **EP 2 718 122 B1**
(45) Date de publication et mention de la délivrance du brevet: **13.01.2016**
(21) Numéro de dépôt: 12729064.1
(22) Date de dépôt: 06.06.2012
(51) Int. Cl.: B60C 15/00, B60C 15/06

(54) **BOURRELET DE PNEUMATIQUE POUR VEHICULE LOURD DE TYPE GENIE CIVIL**
REIFENWULST FÜR SCHWERLASTFAHRZEUG BAUMASCHINENART
TIRE BEAD FOR HEAVY DUTY CONSTRUCTION VEHICLE

(30) Priorité: 07.06.2011 FR 1154932
(43) Date de publication de la demande: 16.04.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BONDU, Lucien, F-63040 Clermont-Ferrand Cedex 9 (FR)
(74) Mandataire: Millanvois, Patrick Jacques Jean
(86) Numéro de dépôt international: PCT/EP2012/060650
(87) Numéro de publication internationale: WO 2012/168273

(56) Documents cités:
- JP-A- 3 224 805
- US-A- 4 716 950
- US-A- 5 433 257
- US-A1- 2003 089 440

## Description

La présente invention concerne un pneumatique radial destiné à équiper un véhicule lourd de type génie civil.

Bien que non limitée à ce type d'application, l'invention sera plus particulièrement décrite en référence à un pneumatique radial destiné à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est égal au minimum à 25".

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche d'armature de carcasse constituée d'éléments de renforcement métalliques enrobés d'un matériau polymérique d'enrobage. Les éléments de renforcement métalliques sont sensiblement parallèles entre eux et font, avec la direction circonférentielle, un angle compris entre 85° et 95°. La couche d'armature de carcasse comprend une partie principale, reliant les deux bourrelets entre eux et s'enroulant, dans chaque bourrelet, autour d'une tringle. La tringle comprend un élément de renforcement circonférentiel le plus souvent métallique entouré d'au moins un matériau, de manière non exhaustive, polymérique ou textile. L'enroulement de la couche d'armature de carcasse autour de la tringle va de l'intérieur vers l'extérieur du pneumatique pour former un retournement, comprenant une extrémité. Le retournement, dans chaque bourrelet, permet l'ancrage de la couche d'armature de carcasse à la tringle du bourrelet.

Chaque bourrelet comprend un élément de remplissage prolongeant radialement vers l'extérieur la tringle. L'élément de remplissage est constitué d'au moins un matériau polymérique de remplissage. L'élément de remplissage est généralement constitué d'un empilage dans le sens radial d'au moins deux matériaux polymériques de remplissage en contact suivant une surface de contact coupant tout plan méridien selon une trace méridienne. L'élément de remplissage sépare axialement la partie principale et le retournement.

Un matériau polymérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange polymérique, exprimé en méga pascals (MPa), la contrainte de traction mesurée pour un allongement de 10% de l'éprouvette.

Un matériau polymérique, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Considérant qu'un bourrelet se comporte mécaniquement comme une poutre en flexion dont les fibres respectivement extérieure et intérieure sont la partie principale et le retournement, le retournement, soumis aux cycles de flexion, subit des déformations de compression, susceptibles d'entraîner sa rupture par fatigue, et donc une diminution de l'endurance du bourrelet et de la durée de vie du pneumatique.

Le document EP 2 216 189 décrit un bourrelet de pneumatique dont l'endurance est améliorée par une réduction des déformations de compression dans le retournement, lors de la flexion du bourrelet sur la jante, en utilisation. Cet objectif est atteint grâce à un retournement tel que la distance entre le retournement et la partie principale décroît continûment, radialement vers l'extérieur, à partir de la tringle, jusqu'à une distance minimale, puis augmente continûment jusqu'à une distance maximale. Le retournement s'étend radialement à l'extérieur du point du retournement correspondant à la distance maximale entre le retournement et la partie principale.

Le document U520030089440-A1 montre un pneumatique selon le préambule de la revendication 1.

Les cycles de flexion entraînent également des contraintes et déformations principalement de cisaillement et de compression, dans les matériaux polymériques de remplissage, en raison de la flexion du bourrelet sur le rebord de jante.

En particulier, au niveau de la surface de contact entre deux matériaux polymériques de remplissage, les cycles de flexion initient des fissures qui se propagent dans le matériau polymérique de remplissage le plus radialement extérieur, et sont susceptibles d'entraîner, dans la durée, une dégradation du pneumatique nécessitant son remplacement.

Selon les inventeurs, l'initiation des fissures résulte du gradient de rigidités entre le matériau polymérique de remplissage le plus radialement intérieur et en contact avec la tringle, et le matériau polymérique de remplissage qui lui est radialement extérieur et adjacent le long d'une surface de contact. Les défauts de cohésion entre les deux matériaux polymériques de remplissage, le long de leur surface de contact, est un facteur déclenchant la fissuration.

La vitesse de propagation des fissures dépend d'une part de l'amplitude et de la fréquence des cycles de contraintes et de déformations, d'autre part des rigidités respectives des matériaux polymériques de remplissage. A titre d'exemple, le module d'élasticité à 10% d'allongement du matériau polymérique de remplissage le plus radialement intérieur et en contact avec la tringle peut être égal à 3 fois le module d'élasticité à 10% d'allongement du matériau polymérique de remplissage qui lui est radialement extérieur et adjacent.

Les inventeurs se sont donnés pour objectif d'améliorer l'endurance des bourrelets d'un pneumatique radial pour véhicule lourd de type génie civil, en diminuant la fissuration initiée au niveau de la surface de contact entre un premier matériau polymérique de remplissage le plus radialement intérieur et en contact avec la tringle et un deuxième matériau polymérique de remplissage radialement extérieur au premier matériau polymérique de remplissage.

Cet objectif a été atteint, selon l'invention, par:
- un pneumatique pour véhicule lourd de type génie civil selon la revendication 1.

Selon l'invention, il est avantageux d'avoir un élément de transition, constitué d'un matériau polymérique de transition, en contact, par sa face radialement intérieure, avec le premier matériau polymérique de remplissage et en contact, par sa face radialement extérieure, avec le deuxième matériau polymérique de remplissage.

Un élément de transition est un élément intercalé entre un premier matériau polymérique de remplissage et un deuxième matériau polymérique de remplissage.

L'élément de transition est constitué le plus souvent d'un seul matériau polymérique de transition. Il peut toutefois être constitué d'un empilement dans le sens radial de matériaux polymériques de transition, dont les modules d'élasticité à 10% d'allongement respectifs sont intermédiaires entre les modules d'élasticité à 10% d'allongement respectifs des premier et deuxième matériaux polymériques de remplissage et décroissent lorsque la distance radiale des matériaux polymériques de transition augmente.

On appelle épaisseur de l'élément de transition, l'épaisseur de l'élément de transition mesurée en dehors des zones de contact respectivement avec la partie principale d'armature de carcasse et le retournement d'armature de carcasse, dans lesquelles l'élément de transition présentent des effilements jusqu'aux extrémités respectivement radialement extérieure et radialement intérieure de l'élément de transition. L'épaisseur de l'élément de transition est souvent sensiblement constante, mais peut également être varaiable. Dans le cas d'un élément de transition constitués d'un empilement dans le sens radial de matériaux polymériques de transition, l'épaisseur de l'élément de transition est l'épaisseur totale de l'empilement dans le sens radial de matériaux polymériques de transition.

L'élément de transition est dit en contact, par sa face radialement intérieure, avec un premier matériau polymérique de remplissage, lorsque la face radialement intérieure de l'élément de transition est géométriquement confondue avec la face radialement extérieure du premier matériau polymérique de remplissage, sauf dans la partie axialement intérieure de la face radialement intérieure de l'élément de transition en contact avec la partie principale.

L'élément de transition est dit en contact, par sa face radialement extérieure, avec un deuxième matériau polymérique de remplissage, lorsque la face radialement extérieure de l'élément de transition est géométriquement confondue avec la face radialement intérieure du deuxième matériau polymérique de remplissage, sauf dans la partie axialement extérieure de la face radialement extérieure de l'élément de transition en contact avec le retournement.

Le module d'élasticité à 10% d'allongement du matériau polymérique de transition est avantageusement intermédiaire entre les modules d'élasticité à 10% d'allongement respectifs des premier et deuxième matériaux polymériques de remplissage, le deuxième matériau polymérique de remplissage ayant un module d'élasticité à 10% d'allongement inférieur au module d'élasticité à 10% d'allongement du premier matériau polymérique de remplissage. La décroissance progressive des modules d'élasticité à 10% d'allongement quand on passe du premier matériau polymérique de remplissage au matériau polymérique de transition, puis au deuxième matériau polymérique de remplissage permet un gradient décroissant et progressif de rigidités, qui permet de diminuer localement les contraintes et déformations dans la zone de transition entre les premier et deuxième matériaux de remplissage et, par conséquent, de ralentir la propagation des fissures.

Un module d'élasticité à 10% d'allongement du matériau polymérique de transition intermédiaire apporte un avantage d'autant plus significatif que l'écart entre les modules d'élasticité à 10% d'allongement respectifs des premier et deuxième matériaux polymériques de remplissage est important. A titre d'exemple, dans un pneumatique selon l'invention, le module d'élasticité à 10% d'allongement du premier matériau polymérique de bourrage est égal à environ 2.9 fois le module d'élasticité à 10% d'allongement du deuxième matériau polymérique de remplissage.

L'épaisseur de l'élément de transition est avantageusement au moins égale à 0.1 fois la distance entre l'extrémité du retournement et la partie principale.

La distance entre l'extrémité du retournement et la partie principale est la distance mesurée, selon la droite passant par l'extrémité du retournement et perpendiculaire à la partie principale, entre la génératrice axialement intérieure des éléments de renforcement du retournement et la génératrice axialement extérieure des éléments de renforcement de la partie principale.

Cette épaisseur minimale de l'élément de transition permet d'établir un gradient de rigidités minimum, permettant de diminuer la vitesse de propagation des fissures.

L'épaisseur de l'élément de transition est également avantageusement au plus égale à 0.5 fois la distance entre l'extrémité du retournement et la partie principale.

En effet, la dissipation thermique du matériau polymérique de transition est supérieure à celle du deuxième matériau polymérique de remplissage, du fait de son module d'élasticité à 10% d'allongement plus élevé. Par conséquent, au-delà d'une épaisseur maximale de l'élément de transition, lorsque l'élément de transition se substitue à une partie du deuxième matériau polymérique de remplissage par rapport au pneumatique de référence, le volume de matériau polymérique de transition trop élevé entraîne une élévation de température du bourrelet dommageable à sa durée de vie, d'où la nécessité de limiter l'épaisseur de l'élément de transition à une valeur maximale.

Par ailleurs, les inventeurs ont choisi de limiter l'épaisseur de l'élément de transition pour agir localement sur la fissuration tout en limitant l'impact de l'élément de transition sur la rigidité en flexion du bourrelet. L'objectif de l'élément de transition n'est pas de permettre une variation de la rigidité de flexion du bourrelet, mais d'agir sur la vitesse de propagation des fissures entre les premier et deuxième matériaux polymériques de remplissage. En d'autres termes, la flexion globale du bourrelet sur le rebord de jante est du même niveau, avec ou sans élément de transition.

Selon l'invention le module d'élasticité à 10% d'allongement du matériau polymérique de transition est au moins égal à 0.9 fois et au plus égal à 1.1 fois la moyenne arithmétique des modules d'élasticité à 10% d'allongement respectifs des premier et deuxième matériaux polymériques de remplissage. Cet intervalle de valeurs pour le module d'élasticité à 10% d'allongement du matériau polymérique de transition garantit un gradient de rigidités minimum, quand on passe successivement du premier matériau polymérique de remplissage, au matériau polymérique de transition puis au deuxième matériau polymérique de remplissage, donc une diminution significative de la vitesse de propagation des fissures.

La face radialement intérieure de l'élément de transition est avantageusement en contact continu avec la partie principale entre un premier point de contact et un dernier point de contact qui est le point radialement le plus extérieur de l'élément de transition. Cette surface de contact continue entre la partie principale et l'élément de transition permet de diminuer la vitesse de propagation de fissures, initiées, dans cette zone de contact, sur la face axialement extérieure de la partie principale, et se propageant axialement vers l'extérieur à travers le deuxième matériau polymérique de remplissage.

Il est également avantageux d'avoir la distance entre le premier point de contact et le dernier point de contact de la face radialement intérieure de l'élément de transition, avec la partie principale, au moins égale à la distance et au plus égale à 3 fois la distance entre l'extrémité du retournement et la partie principale.

Cette distance est la distance entre les deux droites perpendiculaires à la partie principale et passant respectivement par les premier et dernier points de contact de la face radialement intérieure de l'élément de transition avec la partie principale.

Cette distance garantit une zone de contact entre l'élément de transition et la partie principale, dans une zone de courbure maximale de la partie principale dont la face axialement extérieure est une zone préférentielle d'initiation de fissures. L'intervalle de valeurs de cette distance, définie en fonction de la distance entre l'extrémité du retournement et la partie principale, garantit la présence de l'élément de transition dans toute la zone potentielle d'initiation de fissures, sur la face axialement extérieure de la partie principale.

Avantageusement, la distance maximale entre le retournement et la partie principale est au moins égale à 1.1 fois la distance minimale entre le retournement et la partie principale. Il en résulte que l'élément de remplissage, axialement compris entre le retournement et la partie principale, comprend un rétrécissement entraînant une proximité entre le retournement et la partie principale permettant au retournement de ne pas être mis en compression, lors du roulage du pneumatique.

Il est enfin avantageux que la distance du point du retournement, positionné à la distance minimale axialement à l'extérieur de la partie principale, à la ligne de référence de la jante soit au moins égale à 1.25 fois et au plus égale à 2.5 fois la distance du point le plus radialement extérieur de la jante à la ligne de référence de la jante, et que la distance du point du retournement, positionné à la distance maximale axialement à l'extérieur de la partie principale, à la ligne de référence de la jante soit au moins égale à 2 fois et au plus égale à 4 fois la distance du point le plus radialement extérieur de la jante à la ligne de référence de la jante. La ligne de référence de la jante correspond usuellement, pour l'homme du métier, au diamètre au seat. La distance du point le plus radialement extérieur de la jante à la ligne de référence de la jante définit la hauteur du crochet de jante. Ces intervalles de positionnement radial des points du retournement respectivement le plus proche et le plus éloigné de la partie principale garantissent une optimisation des tensions et une absence de compression dans le retournement.

Les caractéristiques de l'invention seront mieux comprises à l'aide de la description des figures annexées 1 et 2 :
- la figure 1 présente une vue en coupe dans un plan méridien du bourrelet d'un pneumatique pour véhicule lourd de type génie civil de l'état de la technique.
- la figure 2 présente une vue en coupe dans un plan méridien du bourrelet d'un pneumatique pour véhicule lourd de type génie civil, selon l'invention.

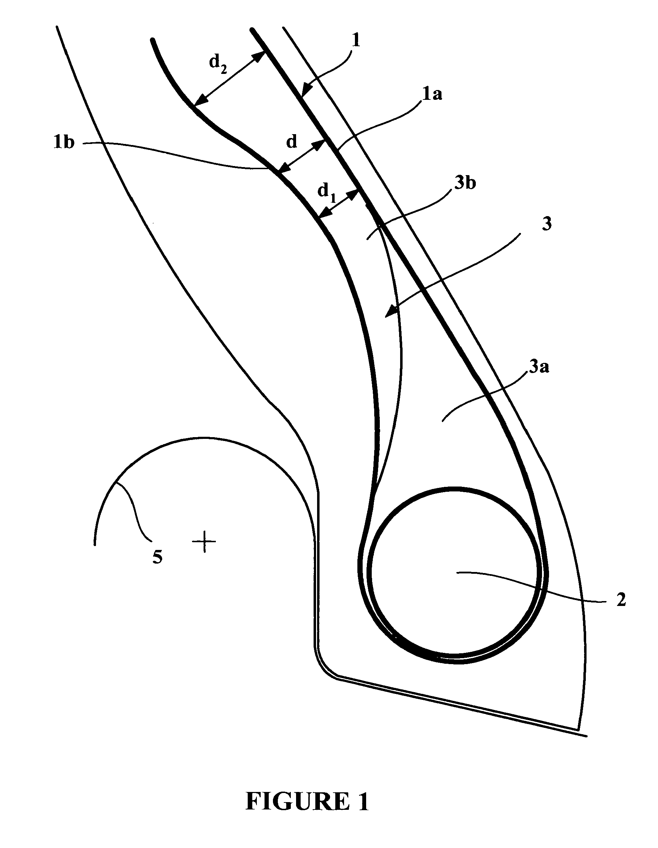

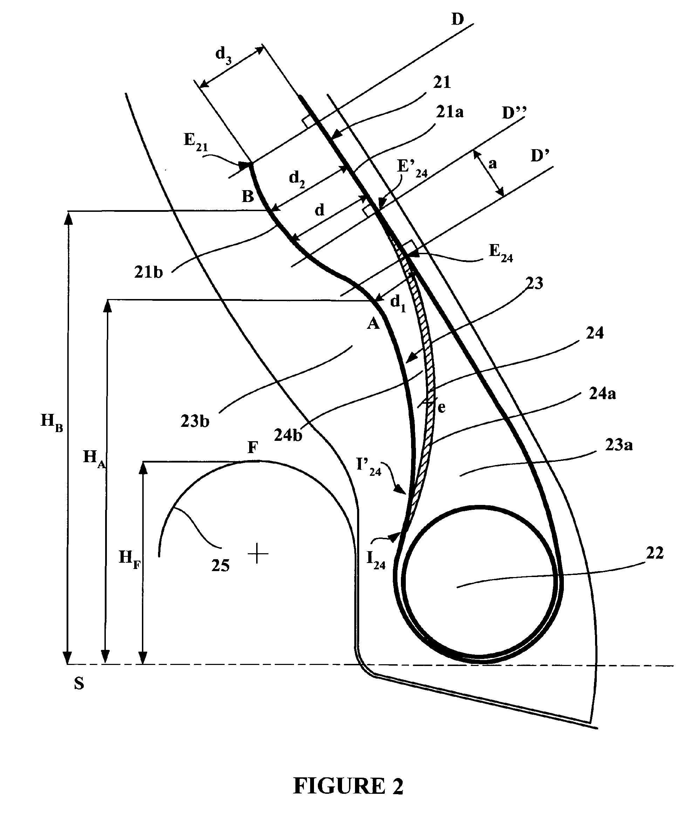

Les figures 1 et 2 ne sont pas représentées à l'échelle pour en faciliter la compréhension.

Sur la figure 1, est représenté un bourrelet de pneumatique pour véhicule lourd de type génie civil de l'état de la technique, comprenant :
- une armature de carcasse comprenant au moins une couche d'armature de carcasse 1 constituée d'éléments de renforcement métalliques,
- la couche d'armature de carcasse comprenant une partie principale la s'enroulant dans chaque bourrelet, de l'intérieur vers l'extérieur du pneumatique, autour d'une tringle 2 pour former un retournement 1b,
- la distance d entre le retournement 1b et la partie principale la décroissant continûment, radialement vers l'extérieur, à partir de la tringle 2, jusqu'à une distance minimale d₁, puis augmentant continûment jusqu'à une distance maximale d₂,
- chaque bourrelet comprenant un élément de remplissage 3 prolongeant radialement vers l'extérieur la tringle 2,
- l'élément de remplissage étant formé de deux matériaux polymériques de remplissage (3a, 3b),
- un premier matériau polymérique de remplissage 3a étant le plus radialement intérieur et en contact avec le noyau tringle 2,
- un deuxième matériau polymérique de remplissage 3b étant radialement extérieur au premier matériau polymérique de remplissage 3a et ayant un module d'élasticité à 10% d'allongement inférieur au module d'élasticité à 10% d'allongement du premier matériau polymérique de remplissage 3a.

La figure 2 présente un bourrelet de pneumatique pour véhicule lourd de type génie civil, selon l'invention, comprenant :
- une armature de carcasse comprenant une couche d'armature de carcasse 21 constituée d'éléments de renforcement métalliques,
- la couche d'armature de carcasse comprenant une partie principale 21a s'enroulant dans chaque bourrelet, de l'intérieur vers l'extérieur du pneumatique, autour d'une tringle 22 pour former un retournement 21b,
- la distance d entre le retournement 21b et la partie principale 21a décroissant continûment, radialement vers l'extérieur, à partir de la tringle 22, jusqu'à une distance minimale d₁, puis augmentant continûment jusqu'à une distance maximale d₂,

- le bourrelet comprenant un élément de remplissage 23 prolongeant radialement vers l'extérieur la tringle 22,
- l'élément de remplissage étant formé de deux matériaux polymériques de remplissage (23a, 23b),
- un premier matériau polymérique de remplissage 23a étant le plus radialement intérieur et en contact avec la tringle 22,
- un deuxième matériau polymérique de remplissage 23b étant radialement extérieur au premier matériau polymérique de remplissage 23a et ayant un module d'élasticité à 10% d'allongement inférieur au module d'élasticité à 10% d'allongement du premier matériau polymérique de remplissage 23a,
- un élément de transition 24, constitué d'un matériau polymérique de transition, d'épaisseur e, étant en contact, par sa face radialement intérieure 24a, avec le premier matériau polymérique de remplissage 23a et en contact, par sa face radialement extérieure 24b, avec le deuxième matériau polymérique de remplissage 23b,
- et le module d'élasticité à 10% d'allongement du matériau polymérique de transition 24 étant intermédiaire entre les modules d'élasticité à 10% d'allongement respectifs des premier et deuxième matériaux polymériques de remplissage.

La géométrie du retournement 21b est caractérisée par le point A du retournement 21b, positionné à la distance minimale d₁, axialement à l'extérieur de la partie principale 21a, et à une distance H_{A}, radialement à l'extérieur d'une ligne de référence S de la jante 22, et par le point B du retournement 21b, positionné à la distance maximale d₂, axialement à l'extérieur de la partie principale 21a, et à une distance H_{B}, radialement à l'extérieur d'une ligne de référence S de la jante 22. Les positions respectives des points A et B sont définis par rapport au point F le plus radialement extérieur de la jante 22, positionné à une distance H_{F}, radialement à l'extérieur d'une ligne de référence S de la jante 22.

L'élément de transition 24 a une épaisseur e généralement mais pas obligatoirement constante, en dehors des zones de contact respectivement avec la partie principale et le retournement, dans lesquelles l'élément de transition présentent des effilements jusqu'aux extrémités respectivement radialement extérieure E'₂₄ et radialement intérieure I₂₄ de l'élément de transition, où se rejoignent les faces radialement intérieure 24a et radialement extérieure 24 b de l'élément de transition 24.

La face radialement intérieure 24a de l'élément de transition 24 est délimitée respectivement par son point radialement le plus intérieur I₂₄ en contact avec le retournement 23b et par son point radialement le plus extérieur E'₂₄ en contact avec la partie principale 21a.

La face radialement extérieure 24b de l'élément de transition 24 est délimitée respectivement par son point radialement le plus intérieur I₂₄ en contact avec le retournement 23b et par son point radialement le plus extérieur E'₂₄ en contact avec la partie principale 21a.

La zone de contact continu entre l'élément de transition 24 et la partie principale 21a est réalisée le long de la face radialement intérieure 24a de l'élément de transition 24 et est radialement délimitée par le premier point de contact E₂₄, radialement le plus intérieur, et le dernier point de contact E'₂₄, radialement le plus extérieur, qui est également l'extrémité radialement extérieure de l'élément de transition.

La zone de contact continu entre l'élément de transition 24 et le retournement 21b est réalisée le long de la face radialement extérieure 24b de l'élément de transition 24 et est radialement délimitée par le premier point de contact I'₂₄, radialement le plus extérieur, et le dernier point de contact I₂₄, radialement le plus intérieur, qui est également l'extrémité radialement intérieure de l'élément de transition 24.

La distance d₃ entre l'extrémité E₂₁ du retournement 21b et la partie principale 21a est la distance mesurée, selon la droite D passant par l'extrémité E₂₁ du retournement et perpendiculaire à la partie principale, entre la génératrice axialement intérieure des éléments de renforcement du retournement et la génératrice axialement extérieure des éléments de renforcement de la partie principale.

La distance a entre les premier et dernier points de contact respectifs de la face radialement intérieure 24a de l'élément de transition 24 avec la partie principale 21a est la distance mesurée entre les droites D' et D" perpendiculaires à la partie principale 21a respectivement en E₂₄ et E'₂₄.

L'invention a été plus particulièrement étudiée dans le cas d'un pneumatique pour véhicule lourd de type dumper de dimension 59/80R63. Selon la norme ETRTO, les conditions nominales d'utilisation d'un tel pneumatique sont une pression de gonflage égale à 6 bars, une charge statique égale à 99 tonnes et une distance parcourue en une heure comprise entre 16 et 32 km.

Le pneumatique 59/80R63 a été conçu conformément à l'invention, telle que représentée sur la figure 2.

Concernant la géométrie du retournement 21b, le point A du retournement 21b est positionné à la distance minimale d₁ égale à 18 mm, axialement à l'extérieur de la partie principale 21a, et à une distance H_{A} égale à 200 mm, radialement à l'extérieur d'une ligne de référence S de la jante 22. Le point B du retournement 21b est positionné à la distance maximale d₂ égale à 27 mm, axialement à l'extérieur de la partie principale 21a, et à une distance H_{B} égale à 390 mm, radialement à l'extérieur d'une ligne de référence S de la jante 22. Les positions respectives des points A et B sont définis par rapport au point F le plus radialement extérieur de la jante 22, positionné à une distance H_{F} égale à 127 mm, radialement à l'extérieur d'une ligne de référence S de la jante 22.

L'épaisseur e de l'élément de transition 24 est constante et égale à 4.5 mm, soit 0.3 fois la distance d₃ entre l'extrémité E₂₁ du retournement et la partie principale 21a égale à 15 mm.

Les modules d'élasticité à 10% d'allongement du premier matériau polymérique de remplissage, du matériau polymérique de transition et du deuxième matériau polymérique de remplissage sont respectivement égaux à 10 MPa, 6.5 MPa et 3.5 MPa. Par conséquent, le module d'élasticité à 10% d'allongement du matériau polymérique de transition est intermédiaire entre les modules d'élasticité à 10% d'allongement respectifs des premier et deuxième matériaux polymériques de remplissage et est égal à 0.96 fois la moyenne arithmétique modules d'élasticité à 10% d'allongement respectifs des premier et deuxième matériaux polymériques de remplissage.

La distance a entre le premier point de contact E₂₄ et le dernier point de contact E'₂₄ de la face radialement intérieure 24a de l'élément de transition 24, avec la partie principale 21a, est égale à 22.5 mm, soit 1.5 fois la distance d₃ entre l'extrémité E₂₁ du retournement 21b et la partie principale 21a.

Des simulations de calculs par éléments finis ont été réalisées respectivement sur un pneumatique de référence, tel que représenté sur la figure 1, et un pneumatique selon l'invention, tel que représenté sur la figure 2. Pour le pneumatique de référence, l'allongement du deuxième matériau polymérique de remplissage 3b, au voisinage de sa face radialement intérieure, est égal à 2,5 fois l'allongement du premier matériau polymérique de remplissage 3a, au voisinage de sa face radialement extérieure. Pour le pneumatique selon l'invention, l'allongement du matériau polymérique de transition 24, au voisinage de sa face radialement intérieure 24a, est égal à 1.5 fois l'allongement du premier matériau polymérique de remplissage 23a, au voisinage de sa face radialement extérieure. De même, pour le pneumatique selon l'invention, l'allongement du deuxième matériau polymérique de remplissage 23b, au voisinage de sa face radialement intérieure 24a, est égal à 1.5 fois l'allongement du matériau polymérique de transition 24, au voisinage de sa face radialement extérieure.

Par conséquent, la vitesse de propagation d'une fissure du premier matériau polymérique de remplissage 23a vers le matériau polymérique de transition 24, puis du matériau polymérique de transition 24 vers le deuxième matériau polymérique de remplissage 23b, dans le cas de l'invention, est plus faible que la vitesse de propagation d'une fissure du premier matériau polymérique de remplissage 3a vers le deuxième matériau polymérique de remplissage 3b, dans le cas du pneumatique de référence, car le ratio de l'allongement du matériau polymérique de transition 24 par rapport à l'allongement du premier matériau polymérique de remplissage 23a, ainsi que le ratio de l'allongement du deuxième matériau polymérique de remplissage 23b par rapport à l'allongement du matériau polymérique de transition 24, sont inférieurs au ratio de l'allongement du deuxième matériau polymérique de remplissage 3b par rapport à l'allongement du premier matériau polymérique de remplissage 3a.

L'invention ne doit pas être interprétée comme étant limitée à l'exemple illustré sur la figure 2 mais peut être étendue à d'autres variantes de réalisation, par exemple et de manière non exhaustive, relatives au nombre de matériaux polymériques de transition, constituant un empilement dans le sens radial compris entre les premier et deuxième matériaux polymériques de remplissage, ou au nombre de matériaux de remplissage, supérieur à 2, constituant l'élément de remplissage.

## Revendications

1. Pneumatique pour véhicule lourd de type génie civil comprenant deux bourrelets destinés à entrer en contact avec une jante (5, 25), une armature de carcasse comprenant au moins une couche d'armature de carcasse (1, 21) constituée d'éléments de renforcement métalliques, la couche d'armature de carcasse comprenant une partie principale (la, 21a) s'enroulant dans chaque bourrelet, de l'intérieur vers l'extérieur du pneumatique, autour d'une tringle (2, 22) pour former un retournement (1b, 21b), la distance (d) entre le retournement (1b, 21b) et la partie principale (1a, 21a) décroissant continûment, radialement vers l'extérieur, à partir de la tringle (2, 22), jusqu'à une distance minimale (d₁), puis augmentant continûment jusqu'à une distance maximale (d₂), chaque bourrelet comprenant un élément de remplissage (3, 23) prolongeant radialement vers l'extérieur la tringle, l'élément de remplissage étant formé d'au moins deux matériaux polymériques de remplissage, un premier matériau polymérique de remplissage (3a, 23a) étant le plus radialement intérieur et en contact avec la tringle, un deuxième matériau polymérique de remplissage (3b, 23b) étant radialement extérieur au premier matériau polymérique de remplissage et ayant un module d'élasticité à 10% d'allongement inférieur au module d'élasticité à 10% d'allongement du premier matériau polymérique de remplissage, où un élément de transition (24), constitué d'un matériau polymérique de transition, est en contact, par sa face radialement intérieure (24a), avec le premier matériau polymérique de remplissage (23a) et en contact, par sa face radialement extérieure (24b), avec le deuxième matériau polymérique de remplissage (23b), **caractérisé en ce que** le module d'élasticité à 10% d'allongement du matériau polymérique de transition (24) est au moins égal à 0.9 fois et au plus égal à 1.1 fois la moyenne arithmétique des modules d'élasticité à 10% d'allongement respectifs des premier et deuxième matériaux polymériques de remplissage (23a, 23b).

2. Pneumatique pour véhicule lourd de type génie civil selon la revendication 1, **caractérisé en ce que** l'épaisseur (e) de l'élément de transition (24) est au moins égale à 0.1 fois la distance (d₃) entre l'extrémité (E₂₁) du retournement (21b) et la partie principale (21a).

3. Pneumatique pour véhicule lourd de type génie civil selon l'une quelconque des revendications 1 ou 2, **caractérisé en ce que** l'épaisseur (e) de l'élément de transition (24) est au plus égale à 0.5 fois la distance (d₃) entre l'extrémité (E₂₁) du retournement (21b) et la partie principale (21a).

4. Pneumatique pour véhicule lourd de type génie civil selon l'une quelconque des revendications 1 à 3, **caractérisé en ce que** la face radialement intérieure (24a) de l'élément de transition (24) est en contact continu avec la partie principale (21a) entre un premier point de contact (E₂₄) et un dernier point de contact (E'₂₄) qui est le point radialement le plus extérieur de l'élément de transition (24).

5. Pneumatique pour véhicule lourd de type génie civil selon l'une quelconque des revendications 1 à 4, **caractérisé en ce que** la distance (a) entre le premier point de contact (E₂₄) et le dernier point de contact (E'₂₄) de la face radialement intérieure (24a) de l'élément de transition (24), avec la partie principale (21a), est au moins égale à la distance (d₃) entre l'extrémité (E₂₁) du retournement (21b) et la partie principale (21a).

6. Pneumatique pour véhicule lourd de type génie civil selon l'une quelconque des revendications 1 à 5, **caractérisé en ce que** la distance (a) entre le premier point de contact (E₂₄) et le dernier point de contact (E'₂₄) de la face radialement intérieure (24a) de l'élément de transition (24), avec la partie principale (21a), est au plus égale à 3 fois la distance (d₃) entre l'extrémité (E₂₁) du retournement (21b) et la partie principale (21a).

7. Pneumatique pour véhicule lourd de type génie civil selon l'une quelconque des revendications 1 à 6, **caractérisé en ce que** la distance maximale (d2) entre le retournement (21b) et la partie principale (21a) est au moins égale à 1.1 fois la distance minimale (d₁) entre le retournement (21b) et la partie principale (21a).

8. Ensemble monté comprenant un pneumatique pour véhicule lourd de type génie civil selon l'une quelconque des revendications 1 à 7, et une jante (25), le pneumatique étant monté sur la jante (25), et comprenant un point A du retournement (21b), positionné à la distance minimale (d₁), axialement à l'extérieur de la partie principale (21a), et à une distance (H_{A}), radialement à l'extérieur d'une ligne de référence (S) de la jante (25), le point F le plus radialement extérieur de la jante (25) étant positionné à une distance (H_{F}), radialement à l'extérieur d'une ligne de référence (S) de la jante (25), **caractérisé en ce que** la distance (H_{A}) du point A du retournement (21b), positionné à la distance minimale (d₁) axialement à l'extérieur de la partie principale (21a), à la ligne de référence (S) de la jante (25) est au moins égale à 1.25 fois et au plus égale à 2.5 fois la distance (H_{F}) du point F le plus radialement extérieur de la jante (25) à la ligne de référence (S) de la jante (25).

9. Ensemble monté comprenant un pneumatique pour véhicule lourd de type génie civil selon l'une quelconque des revendications 1 à 7, et une jante (25), le pneumatique étant monté sur la jante (25), et comprenant un point B du retournement (21b), positionné à la distance maximale (d₂), axialement à l'extérieur de la partie principale (21a), et à une distance (H_{B}), radialement à l'extérieur d'une ligne de référence (S) de la jante (25), le point F le plus radialement extérieur de la jante (25) étant positionné à une distance (H_{F}), radialement à l'extérieur d'une ligne de référence (S) de la jante (25), **caractérisé en ce que** la distance (H_{B}) du point B du retournement (21b), positionné à la distance minimale (d₂) axialement à l'extérieur de la partie principale (21a), à la ligne de référence (S) de la jante (25) est au moins égale à 2 fois et au plus égale à 4 fois la distance (H_{F}) du point F le plus radialement extérieur de la jante (25) à la ligne de référence (S) de la jante (25).

## Patentansprüche

1. Luftreifen für Schwerfahrzeug des Hoch- und Tiefbauwesens, der umfasst: zwei Wulste, die dazu bestimmt sind, mit einer Felge (5, 25) in Kontakt zu gelangen, und eine Karkassenbewehrung, die wenigstens eine Karkassenbewehrungsschicht (1, 21) enthält, die aus metallischen Verstärkungselementen gebildet ist, wobei die Karkassenbewehrungsschicht einen Hauptteil (1a, 21a) aufweist, der in jeden Wulst von innerhalb nach außerhalb des Luftreifens um eine Leiste (2, 22) gewickelt ist, um eine Umlenkung (1a, 21b) zu bilden, wobei der Abstand (d) zwischen der Umlenkung (1b, 21b) und dem Hauptteil (1a, 21a) radial nach außen ausgehend von der Leiste (2, 22) bis zu einem minimalen Abstand (d₁) kontinuierlich abnimmt und dann bis zu einem maximalen Abstand (d₂) kontinuierlich zunimmt, wobei jeder Wulst ein Füllelement (3, 23) aufweist, das die Leiste radial nach außen verlängert, wobei das Füllelement aus wenigstens zwei Polymer-Füllmaterialien gebildet ist, wobei ein erstes Polymer-Füllmaterial (3a, 23a) das radial Innerste ist und mit der Leiste in Kontakt ist und wobei ein zweites Polymer-Füllmaterial (3b, 23b) sich radial außerhalb des ersten Polymer-Füllmaterials befindet und einen Elastizitätsmodul bei 10 % Dehnung besitzt, der kleiner als der Elastizitätsmodul bei 10 % Dehnung des ersten Polymer-Füllmaterials ist, wobei ein Übergangselement (24), das aus einem Polymer-Übergangsmaterial gebildet ist, mit seiner radial inneren Fläche (24a) mit dem ersten Polymer-Filmmaterial (23a) in Kontakt ist und mit seiner radial äußeren Fläche (24b) mit dem zweiten Polymer-Füllmaterial (23b) in Kontakt ist, **dadurch gekennzeichnet, dass** der Elastizitätsmodul bei 10 % Dehnung des Polymer-Übergangsmaterials (24) wenigstens gleich dem 0,9-fachen und höchstens gleich dem 1,1-fachen arithmetischen Mittelwert der jeweiligen Elastizitätsmodule bei 10 % Dehnung des ersten und des zweiten Polymer-Füllmaterials (23a, 23b) ist.

2. Luftreifen für Schwerfahrzeug des Hoch- und Tiefbauwesens nach Anspruch 1, **dadurch gekennzeichnet, dass** die Dicke (e) des Übergangselements (24) wenigstens gleich dem 0,1-fachen Abstand (d₃) zwischen dem Ende (E₂₁) der Umlenkung (21b) und dem Hauptteil (21a) ist.

3. Luftreifen für Schwerfahrzeug des Hoch- und Tiefbauwesens nach einem der Ansprüche 1 oder 2, **dadurch gekennzeichnet, dass** die Dicke (e) des Übergangselements (24) höchstens gleich dem 0,5-fachen Abstand (d₃) zwischen dem Ende (E₂₁) der Umlenkung (21b) und dem Hauptteil (21a) ist.

4. Luftreifen für Schwerfahrzeug des Hoch- und Tiefbauwesens nach einem der Ansprüche 1 bis 3, **dadurch gekennzeichnet, dass** die radial innere Fläche (24a) des Übergangselements (24) zwischen einem ersten Kontaktpunkt (E₂₄) und einem letzten Kontaktpunkt (E'₂₄), der der radial äußerste Punkt des Übergangselements (24) ist, in ununterbrochenem Kontakt mit dem Hauptteil (21a) ist.

5. Luftreifen für Schwerfahrzeug des Hoch- und Tiefbauwesens nach einem der Ansprüche 1 bis 4, **dadurch gekennzeichnet, dass** der Abstand (a) zwischen dem ersten Kontaktpunkt (E₂₄) und dem letzten Kontaktpunkt (E'₂₄) der radial inneren Fläche (24a) des Übergangselements (24) mit dem Hauptteil (21a) wenigstens gleich dem Abstand (d₃) zwischen dem Ende (E₂₁) der Umlenkung (21b) und dem Hauptteil (21a) ist.

6. Luftreifen für Schwerfahrzeug des Hoch- und Tiefbauwesens nach einem der Ansprüche 1 bis 5, **dadurch gekennzeichnet, dass** der Abstand (a) zwischen dem ersten Kontaktpunkt (E₂₄) und dem letzten Kontaktpunkt (E'₂₄) der radial inneren Fläche (24a) des Übergangselements (24) mit dem Hauptteil (21a) höchstens gleich dem 3-fachen Abstand (d₃) zwischen dem Ende (E₂₁) der Umlenkung (21b) und dem Hauptteil (21a) ist.

7. Luftreifen für Schwerfahrzeug des Hoch- und Tiefbauwesens nach einem der Ansprüche 1 bis 6, **dadurch gekennzeichnet, dass** der maximale Abstand (d₂) zwischen der Umlenkung (21b) und dem Hauptteil (21a) wenigstens gleich dem 1,1-fachen minimalen Abstand (d₁) zwischen der Umlenkung (21b) und dem Hauptteil (21a) ist.

8. Montierte Anordnung, die einen Luftreifen für ein Schwerfahrzeug des Hoch- und Tiefbauwesens nach einem der Ansprüche 1 bis 7 und eine Felge (25) umfasst, wobei der Luftreifen an der Felge (25) montiert ist und einen Punkt A der Umlenkung (21b) aufweist, der in dem minimalen Abstand (d₁) axial außerhalb des Hauptteils (21a) und in einem Abstand (H_{A}) radial außerhalb einer Bezugslinie (S) der Felge (25) positioniert ist, wobei der radial äußerste Punkt F der Felge (25) in einem Abstand (H_{F}) radial außerhalb einer Bezugslinie (S) der Felge (25) positioniert ist, **dadurch gekennzeichnet, dass** der Abstand (H_{A}) des Punkts A der Umlenkung (21b), der in dem minimalen Abstand (d₁) axial außerhalb des Hauptteils (21a) positioniert ist, zu der Bezugslinie (S) der Felge (25) wenigstens gleich dem 1,25-fachen und höchstens gleich dem 2,5-fachen Abstand (H_{F}) des radial äußersten Punkts F der Felge (25) zu der Bezugslinie (S) der Felge (25) ist.

9. Montierte Anordnung, die einen Luftreifen für ein Schwerfahrzeug des Hoch- und Tiefbauwesens nach einem der Ansprüche 1 bis 7 und eine Felge (25) umfasst, wobei der Luftreifen an der Felge (25) montiert ist und einen Punkt B der Umlenkung (21b) umfasst, der in dem maximalen Abstand (d₂) axial außerhalb des Hauptteils (21a) und in einem Abstand (H_{B}) radial außerhalb einer Bezugslinie (S) der Felge (25) positioniert ist, wobei der radial äußerste Punkt F der Felge (25) in einem Abstand (H_{F}) radial außerhalb einer Bezugslinie (S) der Felge (25) positioniert ist, **dadurch gekennzeichnet, dass** der Abstand (H_{B}) des Punkts B der Umlenkung (21b), der in dem minimalen Abstand (d₂) axial außerhalb des Hauptteils (21a) positioniert ist, zu der Bezugslinie (S) der Felge (25) wenigstens gleich dem 2-fachen und höchstens gleich dem 4-fachen Abstand (H_{F}) des radial äußersten Punkts F der Felge (25) zu der Bezugslinie (S) der Felge (25) ist.

## Claims

1. Tyre for a heavy vehicle of construction plant type comprising two beads intended to come into contact with a rim (5, 25), a caracass reinforcement comprising at least one carcass reinforcement layer (1, 21) made of a metal reinforcing elements, the carcass reinforcing layer comprising a main part (1a, 21a) wrapped, within each bead, from the inside towards the outside of the tyre around a bead wire (2, 22) to form a turn-up (1b, 21b), the distance (d) between the turn-up (1b, 21b) and the main part (1a, 21a) decreasing continuously, radially towards the outside, from the bead wire (2, 22), as far as a minimum distance (d₁), then increasing continuously as far as a maximum distance (d₂), each bead comprising a filling element (3, 23) extending the bead wire radially towards the outside, the filling element being formed of at least two polymer filling materials, a first polymer filling material (3a, 23a) being radially furthest towards the inside and in contact with the bead wire, a second polymer filling material (3b, 23b) being radially on the outside of the first polymer filling material and having an elastic modulus at 10% elongation that is lower than the elastic modulus at 10% elongation of the first polymer filling material, in which a transition element (24), made of a polymer transition material, is in contact, via its radially inner face (24a), with the first polymer filling material (23a) and in contact, via its radially outer face (24b), with the second polymer filling material (23b), **characterized in that** the elastic modulus at 10% elongation of the polymer transition material (24) is at least equal to 0.9 times and at most equal 1.1 times the arithmetic mean of the respective elastic moduluses at 10% elongation of the first and second polymer filling materials (23a, 23b).

2. Tyre for a heavy vehicle of construction plant type according to Claim 1, **characterized in that** the thickness (e) of the transition element (24) is at least equal to 0.1 times the distance (d₃) between the end (E₂₁) of the turn-up (21b) and the main part (21a).

3. Tyre for a heavy vehicle of construction plant type according to either one of claims 1 or 2, **characterized in that** the thickness (e) of the transition element (24) is at most equal to 0.5 times the distance (d₃) between the end (E₂₁) of the turn-up (21b) and the main part (21a) .

4. Tyre for a heavy vehicle of construction plant type according to any one of Claims 1 to 3, **characterized in that** the radially inner face (24a) of the transition element (24) is in continuous contact with the main part (21a) between a first point of contact (E₂₄) and a last point of contact (E'₂₄) which is the radially outermost point of the transition element (24).

5. Tyre for a heavy vehicle of construction plant type according to any one of Claims 1 to 4, **characterized in that** the distance (a) between the first point of contact (E₂₄) and the last point of contact (E'₂₄) of the radially inner face (24a) of the transition element (24) with the main part (21a) is at least equal to the distance (d₃) between the end (E₂₁) of the turn-up (21b) and the main part (21a).

6. Tyre for a heavy vehicle of construction plant type according to any one of Claims 1 to 5, **characterized in that** the distance (a) between the first point of contact (E₂₄) and the last point of contact (E'₂₄) of the radially inner face (24a) of the transition element (24) with the main part (21a) is at most equal to 3 times the distance (d₃) between the end (E₂₁) of the turn-up (21b) and the main part (21a).

7. Tyre for a heavy vehicle of construction plant type according to any one of Claims 1 to 6, **characterized in that** the maximum distance (d2) between the turn-up (21b) and the main part (21a) is at least equal to 1.1 times the minimum distance (d₁) between the turn-up (21b) and the main part (21a).

8. Mounted assembly comprising a tyre for a heavy vehicle of construction plant type according to any one of claims 1 to 7, and a rim (25), the tyre being mounted on the rim (25), and comprising a point A on the turn-up (21b), which point is positioned at the minimum distance (d₁), axially on the outside of the main part (21a), and at a distance (H_{A}), radially on the outside of a reference line (S) of the rim (25), the radially outermost point F of the rim (25) being positioned at a distance (H_{F}), radially on the outside of a reference line (S) of the rim (25), **characterized in that** the distance (H_{A}) from the point A of the turn-up (21b), positioned at the minimum distance (d₁) axially on the outside of the main part (21a), to the reference line (S) of the rim (25) is at least equal to 1.25 times and at most equal to 2.5 times the distance (H_{F}) from the radially outermost point F of the rim (25) to the reference line (S) of the rim (25).

9. Mounted assembly comprising a tyre for a heavy vehicle of construction plant type according to any one of Claims 1 to 7, and a rim (25), the tyre being mounted on the rim (25), and comprising a point B of the turn-up (21b), which point is positioned at the maximum distance (d₂), axially on the outside of the main part (21a), and at a distance (H_{B}), radially on the outside of a reference line (S) of the rim (25), the radially outermost point (F) of the rim (25) being positioned at a distance (H_{F}), radially on the outside of a reference line (S) of the rim (25), **characterized in that** the distance (H_{B}) from the point B of the turn-up (21b), positioned at the minimum distance (d₂) axially on the outside of the main part (21a), to the reference line (S) of the rim (25) is at least equal to 2 times and at most equal to 4 times the distance (H_{F}) from the radially outermost point F of the rim (25) to the reference line (S) of the rim (25).
